# EUROPEAN PATENT APPLICATION

(11) **EP 1 139 228 A2**
(43) Date of publication of application: **04.10.2001**
(21) Application number: 01302493.0
(22) Date of filing: 19.03.2001
(51) Int. Cl.: G06F 13/40, G06F 13/12

(54) **An intelligent bus interconnect unit**

(30) Priority: 30.03.2000 US 538990
(71) Applicant: LUCENT TECHNOLOGIES INC., Murray Hill, New Jersey 07974-0636 (US)
(72) Inventor: Bodnar, Bohdan Lew, Park Ridge, Illinois 60068 (US); Romy, Neil Jerome, Lisle, Illinois 60532 (US)
(74) Representative: Watts, Christopher Malcolm Kelway, Dr.

(57) **Abstract**

A method and apparatus for transmitting data blocks between a source processor and a destination processor of a multi-processor system. An intelligent bus interface unit (IBIU), acting as an autonomous element, uses a control block supplied by a source processor to receive instructions from the source processor, and to deliver instructions to a destination processor. The IBIU receives information of a data block described by the contents of an associated control block, and transmits the data block and the associated control block to the destination processor. Data blocks are transmitted at one of a plurality of priority levels. A higher priority data block can interrupt the transmission process of a lower priority block. The process of transmitting a data block is broken down into transmitting a series of subblocks. For higher reliability transmission, the contents of the destination processor are compared with the contents of the IBIU after every sub-block has been transmitted to the destination processor. Advantageously, this arrangement allows for a highly flexible method of transmitting data in a multi-processor system.

## Description

### Technical Field

This invention relates to methods and apparatus for interconnecting processors of a multi-processor system.

### Background of the Invention

This invention relates to apparatus and methods for interconnecting the processors of a multi-processor system. It operates without the use of a shared memory or central bus accessible by all processors. In a multi-processor system, it is frequently necessary to transport blocks of information from the memory of one processor to the memory of another processor. By not utilizing a shared memory or central bus, the processors affected by the transaction are not burdened by the possibly lengthy interaction of transport, thus greatly increasing the efficiency of the system.

### Problem:

A common arrangement for transporting blocks of information from one processor to another is to use a shared memory or central bus accessible by the transmitting and receiving processors. Each of these arrangements presents a problem that is overcome by use of this invention.

The problem with the use of a shared memory is that, without any additional apparatus, one processor is blocked from accessing the memory while the other processor uses this shared memory. This prevents the blocked processor from being able to accomplish other tasks until access to the shared memory is allowed. Additionally, the resulting queuing due to the processor being blocked causes unwanted message delays beyond those delays that may already be encountered.

The problem with the use of a central bus is that devices using the central bus must queue for access. As with the use of a shared memory, this queuing adds unwanted additional message delays, as well as blocking the processor that is being queued. Additionally, under heavy load, the central bus may not provide sufficient bandwidth to support the sum of all the data being transported by all the processors sharing the central bus. This again results in blocking, queuing, and additional unwanted message delays until the load is reduced to less than the bandwidth of the central bus.

These aforementioned problems can be partially alleviated by introducing one or more FIFO buffers to store transmitted information until the information can be read by a receiving processor and optionally stored in the receiving memory. Each of a plurality of FIFOs may accept input information from one or more input processors over one or more input buses. At some later time, each of the plurality of FIFOs has the output information read by one or more receiving processors. Though alleviating the problem of blocking the transmitting processor, a number of problems still remain or are introduced as a result of this arrangement. A first problem is that it is awkward to suspend temporarily the transfer of a lower priority message before the completion of said message so that a higher priority message can be transmitted. A second problem is that the receiving processor must poll the FIFO or a status register associated with the FIFO to determine that the FIFO contains information for that receiving processor. Alternatively, the FIFO arrangement must generate an interrupt to the receiving processor. A third problem is that, regardless of whether a polled or interrupt-based arrangement is used, the receiving processor must read the data from the output of the FIFO and either process this data or transfer it to memory. Such an action must be taken before further messages may be received by the receiving processor via the same FIFO. Further-more, unless a multiple priority FIFO is utilized, not receiving the message prevents higher priority messages from being received. In the event that multiple priority FIFOs are utilized, not taking such action prevents further messages of that priority level from being received. A Fourth problem is that multicasting, i.e., transmitting a particular message to a plurality of receiving processors, is difficult to achieve efficiently. The straightforward arrangement of simply transmitting the message by sequentially writing to each of the plurality of FIFOs for a plurality of receiving processors is inefficient and slow.

In one prior art arrangement described in U.S. Patent 4,543,627, a processor interface unit resides between a transmitting processor and each of a plurality of receiving processors, each of the latter connected to a different bus, or at the hub of a plurality of processors, each connected to a different bus. This arrangement does not address or solve the problem of sending messages of multiple priorities in an interleaved fashion, nor does it address or solve the problem of having a plurality of processors that share an access bus. Further, it requires that the transmitting processor know the length of the message.

In summary then, the prior art does not teach an efficient arrangement for transporting large numbers of messages of varying priorities among the processors of a multi-processor system, wherein a plurality of processors share at least one bus or shared memory.

### Solution:

The above problem is solved and an advance is made over the teachings of the prior art in accordance with this invention wherein an intelligent bus interconnect unit (IBIU), acting as an autonomous element, uses a control block supplied by a source processor to receive instructions from the source processor, and to deliver instructions to a destination processor, wherein at least one of the source and destination processors shares a memory access bus with other processors and/or with a shared memory. The intelligent bus inter-connect unit then receives data blocks described by their associated control blocks from the source processor, and transmits these data blocks and their associated control blocks to the destination processor. The instructions specify a priority level of a message; a higher priority level message will interrupt the transmission of a lower priority message. Advantageously, the source processor can describe the requested message transmission action to the intelligent bus interconnect unit via the contents of a relatively small control block, and the intelligent bus interconnect unit can inform the destination processor of these same details in this same compact form.

In accordance with one preferred embodiment of Applicants' invention, data blocks can be multi-cast to a selected plurality of processors on an output bus. The multi-cast message is transmitted to that IBIU once, and is accepted by the selected plurality of receiving pro-cessors in parallel or sequentially. Advantageously, this arrangement is a highly efficient way of performing a multi-casting function.

In one preferred embodiment, the transmittal status (e.g., "transmission complete", "error in transmission"), is determined by the intelligent bus interconnect unit, and is returned to the source processor, and, if necessary, to the destination processor. Advantageously, this arrangement provides an efficient way of requesting re-transmission or informing the source processor that the data block transmission has been completed. The invention allows for both acknowledged and unacknowledged transfers.

In accordance with one preferred embodiment of Applicants' invention, the source processor knows the destination address in the destination processor where a message is to be transmitted. During initialization, known (default) address(es) are used for the destination address(es). Thereafter, following each block transmission, a possible acknowledgment or lapse of a time interval, a new address is derived in the source processor. Advantageously, this arrangement avoids a negotiation process between the two processors to locate an appropriate area for transmitting each data block.

Alternatively, negotiation between source and destination processors can be used for allocating addresses to which data blocks may be sent. Advantageously, such an arrangement allows for a more dynamic adjustment of receive buffer size.

In accordance with one application of Applicants' invention, a master CPU (Central Processing Unit), transmits messages to a plurality of peripheral control CPUs. Advantage-ously, Applicants' arrangement minimizes the overhead for the master CPU in transmitting control messages to the peripheral control CPU. Overhead reduction occurs because the act of transmitting information from one processor to another does not require the sender to actively monitor, or continuously participate in, the transmission of messages; this activity is done by the IBIU. The transmitting processor is only involved in setting up the message transmission mechanism and receiving notification that the message was transmitted or that the transmission failed. On the receiving side, the receiving processor's activity consists of receiving a notification that a new message has arrived. Furthermore, in the event that reliable transport was requested by the transmitting processor and the message transport failed, the receiving processor would not be notified that a message transport was attempted.

In accordance with another application of Applicants' invention, the IBIU is used for transmitting routing updating information from a central routing database of a large Internet Protocol (IP) router to the individual line cards for performing the routing function for individual IP packets. Advantageously, the overhead for transmitting the frequent IP router updating messages is minimized in this type of system.

### Brief Description of the Drawing(s):

Figure 1 is an overall block diagram of one direction of transmission in a muli-processor system; and
Figures 2 - 5 are flow diagrams, illustrating the method of Applicants' invention.

### Detailed Description:

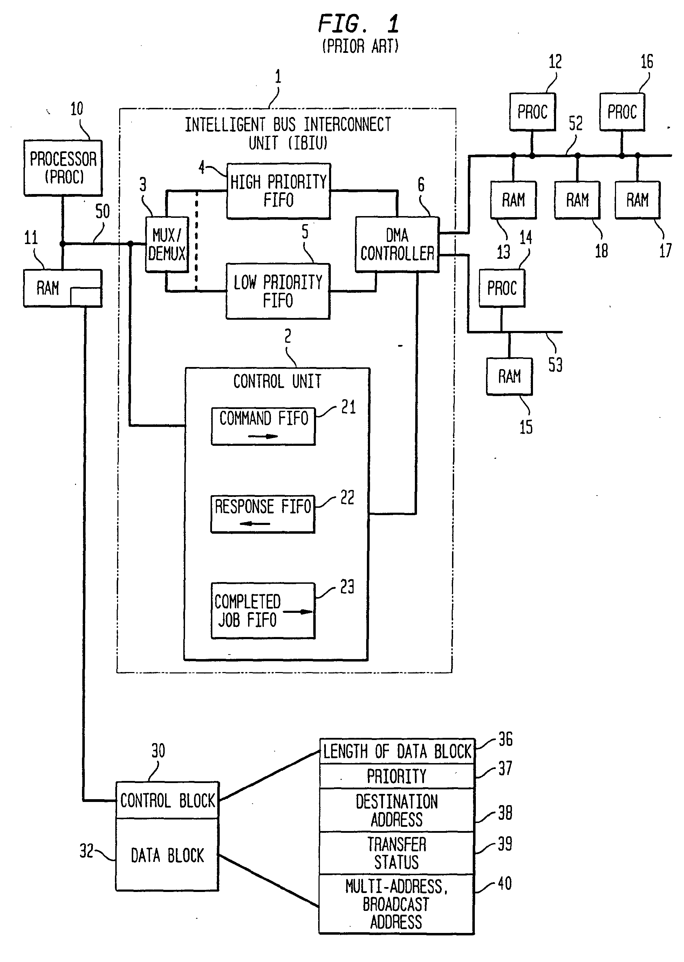

Figure 1 is a block diagram illustrating one direction of transmission of a message from a source processor to a destination processor. The term "processor" as used herein includes a central processing unit (CPU), and an RAM memory associated with that CPU. In addition, there may be another, usually larger, RAM accessible by more than one CPU (processor). In this case, the processor comprising CPU 10 and RAM 11 wishes to transmit a message to another processor comprising CPU 12 and RAM 13. RAM 11 is connected to bus 50, an input bus to the intelligent bus interface unit (IBIU) 1, which delivers an output to bus 52 connected to memory 13. The IBIU 1 includes a control unit 2 for controlling the operations of the IBIU, a de-multiplexer, (Demux 3), for taking the output of bus 50 and transmitting to one of a plurality of first-in, first-out, (FIFO) queues. IBIU includes at least two FIFOs: FIFO 4, which is a high priority message FIFO, and FIFO 5, which is a low priority message FIFO. Clearly, additionally medium priority FIFOs can be added to IBIU 1. The output of the FIFOs goes to an output port, direct memory access (DMA) control unit 6 for sending messages to output bus 52, and for specifying where in memory of a destination processor memory, a particular message is to be routed, and for controlling the sequences of addresses for loading sequential bytes of a message into sequential bytes of a destination RAM. The DMA unit sends a signal to a destination bus arbiter (not shown), seizes a RAM, loads the RAM, and releases the RAM.

The DMA controller is also connected to output bus 53, which is connected to another processor 14 comprising RAM 15. In addition, bus 52 is connected to yet another processor 16 comprising RAM 17, and is connected to a large RAM 18, accessible by processors 12 and 16. Thus, the DMA controller can access a bus that is shared by a plurality of processors and can access a plurality of buses.

The control unit 2 accesses 3 FIFOs: a command FIFO 21 for accepting commands from source processors; a response FIFO 22 for transmitting responses from the IBIU to a source processor; and a job completed FIFO 23 for informing a destination processor that a block has been transferred to that processor.

For the case of a multi-cast or broadcast block transfer, the IBIU receives the block from a source processor and transmits the block sequentially to each of the destination processors specified by the multi-cast or the broadcast address.

A key element of Applicants' invention is the use of a control block for controlling the setting up of a message transfer. When the processor of CPU 10, RAM 11 wishes to transmit a message to the processor of CPU 12, RAM 13, it formulates a control block 30 for transmitting a data block 32. The control block includes information specifying the length of the data block 36, the priority of the data message 37, the destination address where the data block is to be stored, including the identity of the processor where this address is to be found 38, and a status of the transfer of this block of information 39. The status is an indication whether transmission has been completed, and if completed and is a high reliability message, is error free. For high reliability messages, the data block is transmitted in quanta called "sub-blocks". In the preferred embodiment, the entire block is loaded into the appropriate priority FIFO and sent to the destination processor in sub-blocks. After each sub-block has been transmitted, the sub-block is read from the receiving processor by the IBIU; if the read sub-block matches that stored in the transmitting FIFO, a transmission of the next sub-block can begin; if not, the sending and receiving processors are informed that the transmission has failed. For a multi-cast or broadcast message, an appendix to control block 30 contains the multi-cast/broadcast addresses where the information is to be sent, (Block 40).

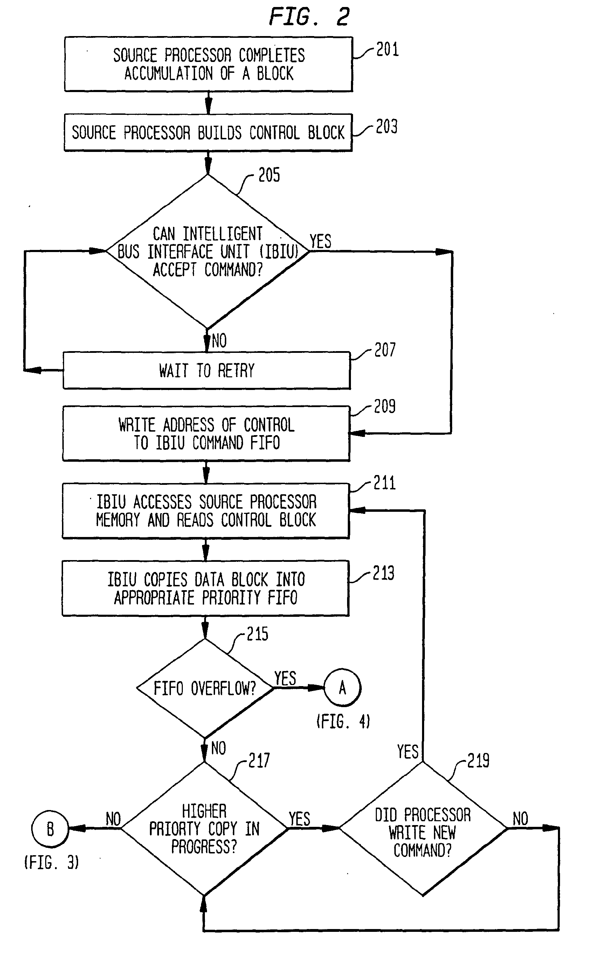

The use of the various blocks of IBIU 1 will be understood when considered with Figures 2 - 5, which describe the process of sending a message. In this case, the assumption is that the message is being transmitted from processor 10, (the source processor), to processor 12, (the destination processor). The process begins when the source processor completes the accumulation of a message (Action Block 201). The source processor builds a control block for the message, (Action Block 203). Test 205 is used to determine whether the IBIU can accept a command. In general, this test is a test to see if there is room in the command FIFO of the IBIU. If the IBIU cannot accept the command, then the source processor waits to re-try, (Action Block 207), and subsequently repeats Test 205. In the preferred embodiment, it was felt that a comparison between the sending processor and the FIFO was not necessary; in alternative embodiments, this process could also be implemented.

If the IBIU can accept the command, then the address of the control block is written into the IBIU command FIFO, (Action Block 211). The IBIU then copies the data block from the source processor into an appropriate priority FIFO, (Action Block 213). (High priority messages would go into the high priority FIFO, low priority messages into the low priority FIFO, and others might go into one of a plurality of medium priority FIFOs). Test 215 is used to determine whether that FIFO is overflowing. If not, Test 217 is used to determine whether a higher priority copy is in progress. If a higher priority copy is in progress, then Test 219 is used to determine whether the source processor wrote a new command into the command FIFO. If not, Test 217 is repeated until no more higher priority copies are in progress. If a new command has been written, then Action Block 211 is entered to fetch a new message.

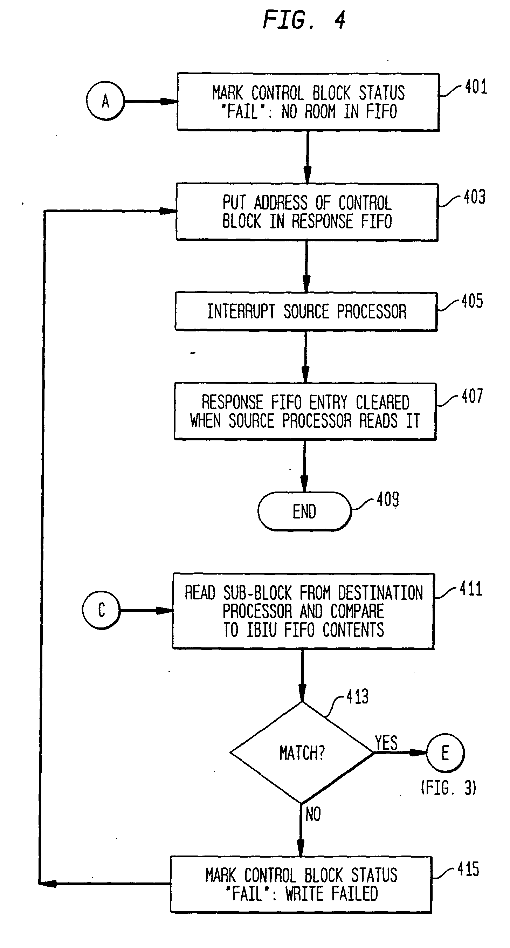

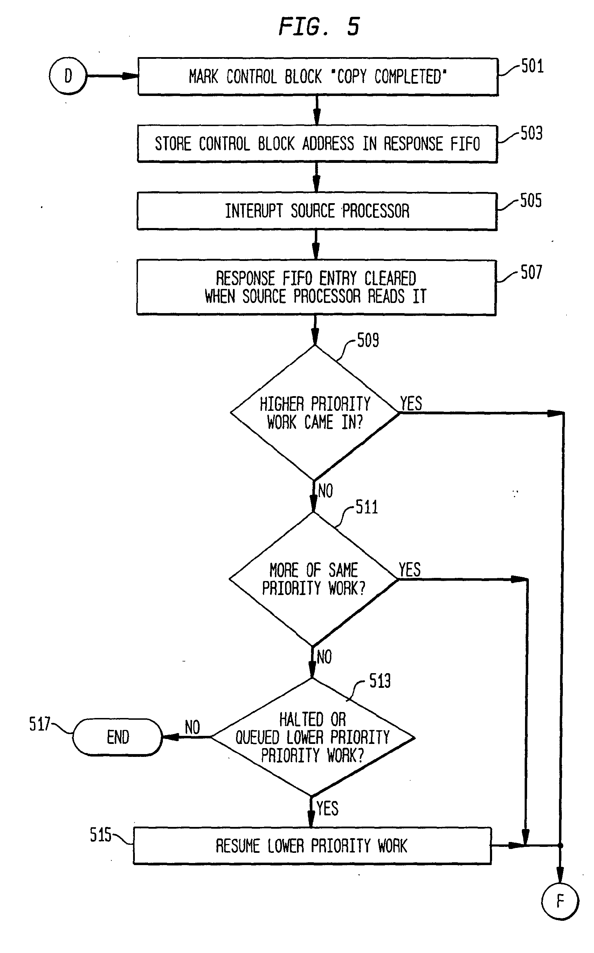

If no higher priority copy is in progress, (negative result of Test 217), then Test 301 is used to determine whether a lower priority copy is in progress. If so, then the IBIU waits for the sub-block to finish the copy action, (Action Block 303), and stops lower priority work, (Action Block 305). Action Block 307 is then entered, following Action Block 305, or follow-ing a negative result of Test 301, (i.e., no lower priority copy in progress). Action Block 307 moves a sub-block from the IBIU to a destination RAM. Test 309 is used to determine whether reliable transport has been requested. If so, the actions described hereinafter with respect to Figure 4, (starting with Action Block 411), are performed, and the message is transmitted in sub-blocks. If no reliable transport is needed for this block, then Test 311 is used to determine whether the complete block has been copied. If the complete block has been copied, then the actions of Figure 5 described hereinafter, are performed. If the complete block has not been copied, then Test 313 is used to determine whether any higher priority work has been requested. If higher priority work has been requested, then the copying of the present block is stopped. Following either Action Block 315 or a negative result of Test 313, Action Block 307 to move a sub-block to a destination processor is re-entered. In other words, the transmission is preemptive - priority based.

Note that in this embodiment, the transmission of a sub-block is completed, (see Action Block 303) before higher priority work is started. In alternative embodiments, transmission of lower priority blocks can be halted after the transmission of any byte or word. That type of arrangement required hardware detection of the higher priority request.

Figure 4 relates to actions performed in case of a data FIFO overflow, (Action Block 401), or if reliable transport is needed for this message, (Action Block 411). In case of FIFO overflow, the status portion of the control block of the source processor is marked "Failed",
with a special indication that there is no room in the data FIFO. The address of the control block is placed in the response FIFO, (Action Block 403). The source processor is then interrupted, (Action Block 405), and the entry in the response FIFO is cleared when the source processor reads it, (Action Block 407). This is the end of this process, (End Block 409).

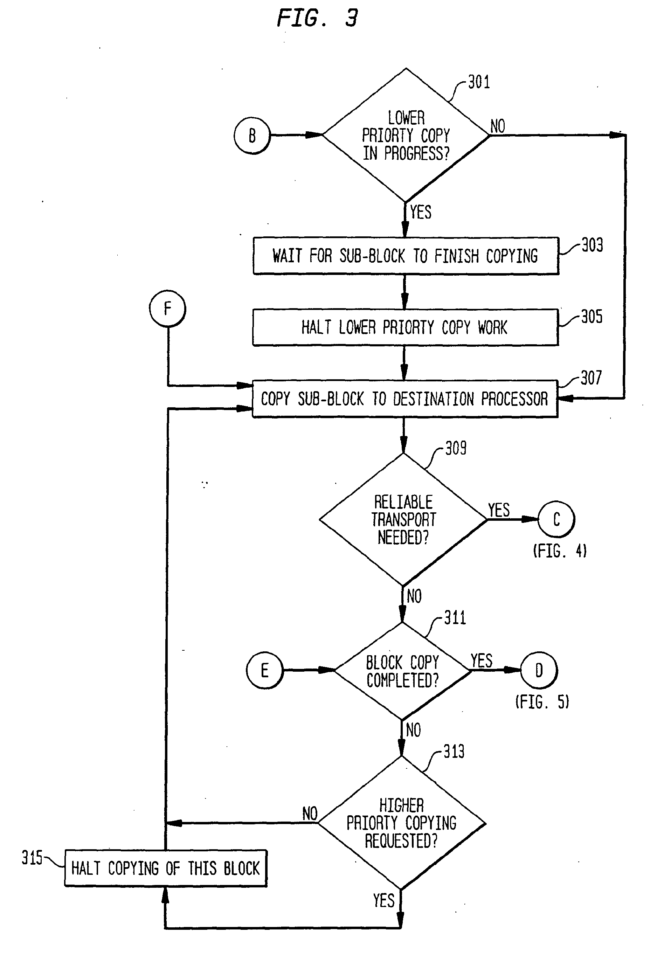

For the case of reliable transport required, the sub-block is read from the destination processor and compared with the contents of the FIFO, (Action Block 411). Test 413 is used to determined whether the two sub-blocks match. If they do, then Test 311, (Figure 3), is entered to determine whether this was the last sub-block, and if not, further copying is initiated. If there is no match found in Test 413, indicating a failure to copy properly, then the control block is marked "Fail", with an indication of write failure, (Action Block 415), and Action Block 403 is entered to inform the source processor of the failure.

Figure 5 relates to actions performed after the transmission of a block has been completed. The control block status is marked "Completed", (Action Block 501), and the control block address is stored in the response FIFO, (Action Block 503). The source processor is interrupted, (Action Block 505). Response FIFO 23 is used to inform the destination processor; (it operates in the same was as response FIFO 22). The response FIFO entry is cleared when the source processor has read this address, (Action Block 507). Test 509 is used to determine whether higher priority work has come in, Test 511 is used to determine whether more of the same priority work is available, and, in either case, Action Block 307, (Figure 3), is entered to move another sub-block. If, Test 509 and 511 are both negative, then Test 513 is used to determine whether any halted lower priority work is in the IBIU. If not, then, this is the end of the process, (Action Block 517). If there is halted or queued lower priority work, then this halted or queued lower priority work is resumed or started, (Action Block 515), by entering Action Block 307 of Figure 3.

The above description is of one preferred embodiment of Applicants' invention. Many other embodiments will be apparent to those of ordinary skill in the art, without departing from the scope of the invention. The invention is only limited by the following Claims.

## Claims

1. In a multi-processor system, a method of transmitting a data block from a source processor to a destination processor, comprising the steps of:
preparing a control block in said source processor;
transmitting information from said source processor to an intelligent bus interconnect unit (IBIU), for reading said control block;
said IBIU reading said control block;
said IBIU copying data of said data block into an appropriate one of a plurality of different priority FIFO (First-In/First-Out) memories;
transmitting information of said data block from the FIFO of said IBIU to said destination processor;
wherein, the step of transmitting information of said data block com-prises the steps of transmitting sub-blocks of said data block;
wherein, said IBIU can transmit data of a different data block having a higher priority than the data block being transmitted before transmission of said data block is completed;
wherein, said control block provides information to said IBIU for read-ing said data block from said source processor; and
wherein, said control block provides information for transmitting said data block to said destination processor.

2. The method of Claim 1, wherein the step of transmitting information of said data block to said destination processor comprises the step of transmitting data of said data block to said destination processor, using a direct memory access circuit of said IBIU.

3. The method of Claim 1, further comprising the step of interrupting said source pro-cessor to report completion of transmission of said data block to said destination processor.

4. The method of Claim 1, wherein said destination processor is interrupted to report the completion of transmission of said data block.

5. The method of Claim 1, further comprising the step of providing for highly reliable transmission of said data block;
wherein a step of transmitting said data block with high reliability, comprises the step of comparing data written into said destination processor with information stored in said IBIU; and
wherein if there is a failure to match between data of said data block in said IBIU and in said destination processor, said source processor is notified of an error condition by said IBIU.

6. The method of Claim 1, wherein said control block comprises data specifying the length of said data block, the priority of said data block, a destination address in said destinat-ion processor for said data block, and information regarding the status of the transfer operation of said data block.

7. The method of Claim 1, wherein said control block comprises a list of addresses in a plurality of destination processors to which said block is to be transmitted;
further comprising the step of said IBIU transmitting said data block to each of said plurality of destination processors.

8. The method of Claim 1, wherein a higher priority transmission can interrupt a transmission of a lower priority block after the completion of transmission of any sub-block of the lower priority block.

9. The method of Claim 1, wherein a higher priority transmission can interrupt a transmission of a lower priority block after one of any byte, word, or extended word of the lower priority block has been transmitted.

10. Apparatus for transmitting a plurality of data blocks between a source processor and a destination processor of a multi-processor system comprising:
an intelligent bus interface unit (IBIU);
said IBIU comprising:
a plurality of FIFO, (First-In/First-Out), memories for storing data blocks, said plurality of FIFOs comprising FIFOs for different priority data blocks, wherein each FIFO stores data blocks of only one priority;
an output port direct memory access (DMA) controller for controlling the storing of one or more of said FIFOs to a destination processor; and
a control unit for controlling said IBIU;
said control unit operative for:
reading a control block of a source processor, said source processor for transmitting a data block;
based on information of said control block, acquiring information in said IBIU of said data block from said source processor;
based on information of said control block, transmitting information of said data block from said IBIU to said destination processor;
wherein the step of transmitting information to said destination proces-sor comprises the step of transmitting sub-blocks of said data block, and allowing higher priority data blocks to be transmitted before a trans-mission of a lower priority block has been completed.

11. The apparatus of Claim 10, wherein said IBIU further comprises a direct memory access circuit for transmitting data to said destination processor.

12. The apparatus of Claim 10, wherein said IBIU further comprises means for interrupting said source processor to report completion of transmission of said data block to said destination processor.

13. The apparatus of Claim 10, further comprising means for interrupting said destination processor to report the completion of transmission of said data block.

14. The apparatus of Claim 10, further comprising means for providing highly reliable transmission of said data block;
wherein said means for providing highly reliable transmission comprises means for comparing data written into said destination processor with information stored in said IBIU; and
means for reporting to said source processor if there is a failure to match between data of said data block in said IBIU and in said destination processor.

15. The apparatus of Claim 10, wherein said control block comprises data specifying the length of said data block, the priority of said data block, a destination address in said destination processor for said data block, and information regarding the status of the transfer operation of said data block.

16. The apparatus of Claim 10, wherein said control block comprises a list of addresses in a plurality of destination processors to which said block is to be transmitted;
wherein said IBIU further comprises means for interrupting the trans-mission of a lower priority block after completion of transmission of any sub-block of the lower priority block in order to transmit a higher priority block.

17. The apparatus of Claim 10, wherein transmission of a lower priority block can be interrupted after one of any byte, word, or extended word of the lower priority has been transmitted in order to transmit a higher priority block.
